# EUROPÄISCHE PATENTSCHRIFT

(11) **EP 3 344 470 B1**
(45) Veröffentlichungstag und Bekanntmachung des Hinweises auf die Patenterteilung: **07.07.2021**
(21) Anmeldenummer: 16781788.1
(22) Anmeldetag: 14.10.2016
(51) Int. Cl.: B44C 1/165, C09C 1/62

(54) **ABZIEHBILD ZUR ERZEUGUNG EINES DEKORS**
DECAL FOR PRODUCING A DECORATION
IMAGE À DÉCALQUER POUR RÉALISER UNE DÉCORATION

(30) Priorität: 16.10.2015 DE 102015117711
(43) Veröffentlichungstag der Anmeldung: 11.07.2018
(73) Patentinhaber: Ferro GmbH, 60327 Frankfurt (DE)
(72) Erfinder: SCHULZ, Andreas, 61184 Karben (DE); KHAN, Marya, 63225 Langen (DE); POTH, Lutz, 64380 Roßdorf (DE); SCHÄFER, Silke, 60435 Frankfurt (DE); TORSIELLO, Francesca, 61130 Nidderau (DE); WENTZ, Florian, 64293 Darmstadt (DE)
(74) Vertreter: Reinhardt, Markus
(86) Internationale Anmeldenummer: PCT/EP2016/074673
(87) Internationale Veröffentlichungsnummer: WO 2017/064237

(56) Entgegenhaltungen:
- EP-A2- 1 346 838
- DE-A1- 2 916 723
- GB-A- 2 001 079
- US-A- 3 949 139

## Beschreibung

Die vorliegende Erfindung betrifft ein Abziehbild zur Erzeugung eines Dekors sowie ein Verfahren zur Herstellung eines Abziehbildes.

Viele Gegenstände, beispielsweise Gläser, Geschirr oder Kunststoffformteile, werden mit einem Dekor versehen. Insbesondere zur Herstellung von hochwertigem Porzellan und Glas werden vielfach sogenannte Edelmetallglanzpräparate eingesetzt, die direkt auf die Gegenstände aufgedruckt werden können, so dass ein wertvolles Dekor erhalten werden kann. Diese Edelmetallglanzpräparate umfassen hohe Mengen an Edelmetallen, beispielsweise Gold, so dass deren Verwendung mit hohen Kosten verbunden ist. Ferner müssen die erhaltenen Dekore bei einer hohen Temperatur (üblich ab 490°C) in das Substrat eingebrannt werden, so dass hohe Kosten entstehen und daher nur für Substrate geeignet sind, die bei diesen hohen Temperaturen beständig sind. Derartige Edelmetallglanzpräparate sind beispielsweise in DE 10 2004 031692 A1 beschrieben.

Ferner ist die Verwendung von Pigmenten zur Erzielung von Glanzeffekten bekannt, wobei im Allgemeinen Leafing-Pigmente eingesetzt werden, um eine spiegelnde Oberfläche zu erhalten. Diese Ausführungsform hat jedoch den Nachteil, dass die Haftung der Pigmente auf dem Substrat relativ gering ist und die Pigmentschicht außen liegt, so dass diese leicht beschädigt werden kann. Non-Leafing Pigmente werden im Allgemeinen als Einschichtlacke oder Grundierungen eingesetzt, um beispielsweise einen Korrosionsschutz zu bewirken (vgl. Benda-Lutz: Lacke und Beschichtungen). Nachteilig ist jedoch, dass der Spiegeleffekt so gering ist, dass im Allgemeinen keine entsprechenden Dekore, sondern lediglich getönte, relativ matte Lacke erhalten werden können. EP 1 346 838 A2 und GB 2 001 079 A offenbaren beide ein Abziehbild gemäß dem Oberbegriff von Anspruch 1.

In Anbetracht des Standes der Technik ist es nun Aufgabe der vorliegenden Erfindung, ein Verfahren zur Erzeugung eines Dekors bereitzustellen, welches die zuvor dargelegten Probleme löst. Insbesondere sollte ein metallischer Spiegeleffekt, vorzugsweise ein Glanzgold-, Glanzzitronengold-, Glanzplatin- und Glanzpalladium-Effekt erhalten werden, wie dieser beispielsweise durch Edelmetallglanzpräparate erzeugt werden kann, ohne dass hohe Einbrenntemperaturen notwendig wären. Ferner sollte das Dekor möglichst einfach und kostengünstig erhalten werden können. Hierbei sollten die Eigenschaften der Beschichtungen, durch die ein Dekor erzeugt wird, nicht nachteilig beeinflusst werden. So sollte die Beschichtung eine möglichst hohe Haftung auf unterschiedlichen Materialien zeigen. Ferner sollte das Dekor, welches durch das Verfahren erhalten werden kann, eine hohe Abbildungsschärfe aufweisen.

Gelöst werden diese sowie weitere nicht explizit genannte Aufgaben, die jedoch aus den hierin einleitend diskutierten Zusammenhängen ohne weiteres ableitbar oder erschließbar sind, durch ein Abziehbild mit allen Merkmalen des Patentanspruchs 1. Zweckmäßige Abwandlungen des erfindungsgemäßen Abziehbilds werden in Unteransprüchen 2 bis 12 unter Schutz gestellt. Hinsichtlich des Verfahrens stellt der Gegenstand des Anspruchs 13 eine Lösung der zugrunde liegenden Aufgabe bereit.

Gegenstand der vorliegenden Erfindung ist ein Abziehbild zur Erzeugung eines Dekors, umfassend eine Non-Leafing-Pigment-Schicht und eine erste Schutzschicht, das dadurch gekennzeichnet ist, dass das Abziehbild so ausgestaltet ist, dass die Non-Leafing-Pigment-Schicht näher zu einem Substrat hin aufgetragen werden kann als die erste Schutzschicht.

Durch diese Ausgestaltung kann auf einfache Weise ein Dekor erhalten werden, welches einen metallischen Spiegeleffekt, vorzugsweise einen Glanzgold-, Glanzzitronengold-, Glanzplatin- und Glanzpalladium-Effekt erzeugt. Hierbei kann ein Dekor einfach und leicht auf verschiedene Oberflächen aufgebracht werden, ohne dass eine hohe Einbrenntemperatur notwendig wäre. Ferner kann das Dekor durch Einsatz kostengünstiger Druckverfahren, auch für kleinere Serien vorab produziert werden, wobei das Substrat keinen besonderen Beschränkungen unterliegt.

Hierdurch kann überraschend auf besonders einfache und wirtschaftliche Weise ein Glanzgold-, Glanzzitronengold-, Glanzplatin- und Glanzpalladium-Effekt erhalten werden, ohne dass Edelmetalle eingesetzt werden müssten. Das Dekor stellt daher ein kostengünstiges Glanzgold-, Glanzzitronengold-, Glanzplatin- und Glanzpalladium-Imitat dar.

Dabei ist die Non-Leafing-Pigment-Schicht so ausgestaltet, dass diese einen metallischen Spiegeleffekt, vorzugsweise einen Glanzgold-, Glanzzitronengold-, Glanzplatin- und Glanzpalladium-Effekt erzeugt.

In einer besonderen Ausgestaltung zeigt sich der metallische Spiegeleffekt durch einen hohen Glanz. Erfindungsgemäß weist das durch das Abziehbild erhältliche Dekor einen Glanz von mindestens 200 GE, bevorzugt mindestens 300 GE, insbesondere bevorzugt mindestens 400 GE, speziell bevorzugt 500 GE und insbesondere speziell bevorzugt 650 GE, auf. Der Glanz wird hierbei bei 20° über eine Messung des gerichteten Reflexionsgrades bestimmt, entsprechend DIN EN ISO 7668:2011-03, wobei GE für Glanzeinheiten steht. Vorzugsweise kann hierzu ein Glanzmessgerät micro-TRI-gloss von der Fa. Byk Gardner eingesetzt werden, wobei weitere Hinweise der Gerätebeschreibung entnommen werden können.

Der zuvor beschriebene hohe Glanz hängt unter anderem von der konkreten Ausgestaltung der eingesetzten Pigmente, insbesondere deren Form und deren Zusammensetzung ab. Glanzwerte von mindestens 200 GE, bevorzugt mindestens 300 GE, insbesondere bevorzugt mindestens 400 GE, speziell bevorzugt 500 GE und insbesondere speziell bevorzugt 650 GE werden bevorzugt von Aluminiumpigmenten, vorzugsweise von plättchenförmigen Aluminiumpigmenten erreicht, die beispielsweise durch PVD-Verfahren erhalten werden können. Mit den zuletzt genannten PVD-Pigmenten können sogar Glanzwerte von ganz besonders bevorzugt mindestens 1000 GE erreicht werden.

Bei den erfindungsgemäßen Abziehbildern mit eingefärbtem Schutzlack und Aluminiumpigment zur Erzielung eines Goldfarbtons sind die erzielten Glanzwerte häufig geringer als die zu vorgenannten Werte, wobei durch die erfindungsgemäße Ausgestaltung, d.h. dadurch, dass die Non-Leafing-Pigmentschicht näher zu einem Substrat hin aufgetragen werden kann als die erste Schutzschicht, zu höheren Glanzwerten führt als eine Ausgestaltung, die dieses Merkmal nicht umfasst.

Das durch das Abziehbild erhältliche Dekor kann einen Glanz von mindestens 200 GE, speziell bevorzugt mindestens 400 GE und insbesondere speziell bevorzugt mindestens 600 GE erreichen, falls Aluminiumpigmente in Kombination mit gefärbter erster Schutzschicht eingesetzt werden.

Messing- und/oder Goldbronzepigmente führen in erfindungsgemäßen Abziehbildern häufig zu geringeren als den zuvor genannten Werten, wobei durch die erfindungsgemäße Ausgestaltung, d. h. dadurch, dass die Non-Leafing-Pigment-Schicht näher zu einem Substrat hin aufgetragen werden kann als die erste Schutzschicht, zu höheren Glanzwerten führt als eine Ausgestaltung, die dieses Merkmal nicht umfasst. Das durch das Abziehbild erhältliche Dekor kann einen Glanz von mindestens 200 GE, speziell bevorzugt mindestens 400 GE und insbesondere speziell bevorzugt mindestens 600 GE erreichen, falls beispielsweise Messing- und/oder Goldbronzepigmente eingesetzt werden.

Das Abziehbild umfasst eine erste Schutzschicht, die bevorzugt aus einem Lack, besonders bevorzugt aus einem vernetzten Lack aufgebaut sein kann. Zu den bevorzugten Lacken, aus denen die erste Schutzschicht hergestellt werden kann, gehören Lacke, die durch Bestrahlung mit Licht, vorzugsweise ultraviolettem Licht gehärtet werden können (UV-Lacke) und Zwei-Komponenten Lacke (2K-Lacke). UV-Lacke können radikalisch härtend oder kationisch härtend sein. Bevorzugt sind kationisch härtende UV-Lacke. Vorzugsweise haben diese Lacke als Harzbasis eine oxirangruppenhaltige Verbindung, in der Regel ein cycloaliphatisches Epoxidharz (vgl. Edwin Tafelmeier, UV-Strahlenhärtungstechnologien, Coates Screen, SN-Online). Im Allgemeinen kationisch härtende UV-Lacke Epoxidharze, modifizierte Harze (für Flexibilität oder Beständigkeit), Reaktivverdünner, Photoinitiatoren (vorzugsweise blockierte Lewis- oder Broensted-Säuren), ggf. Pigmente, Additive (Benetzung, Verlauf) und unter Umständen Polyole (Polyester-Polyole und/oder Polyether-Polyole) umfassen. Darlegungen zu bevorzugten 2K-Lacken sind in Paolo Nanetti, Lackrohstoffkunde, Vincentz 1977, Kap.1.4.1 Isocyanatharze 2 (Polyuretane, PUR-Materialien), S.78-85 dargestellt. Zu den bevorzugten 2K-Lacken zählen insbesondere Lacke, die auf aliphatischen und/ oder cycloaliphatischen Polyisocyanaten und OH-funktionellen Polyacrylsäureestern und/oder OH-funktionellen Polymethacrylsäureestern bzw. OH-funktionellen Acryl- oder Methacrylcopolymeren aufgebaut sind.

Ferner kann vorgesehen sein, dass die erste Schutzschicht eine Dicke im Bereich von 0,3 µm bis 6 µm, vorzugsweise 0,4 µm bis 4,0 µm, besonders bevorzugt 0,5 µm bis 3 µm aufweist (Trockenfilmdicke). Die Trockenfilmdicke kann beispielsweise mittels DIN 50981: 1979-05 und DIN 50982:1987-08 gemessen werden, vorzugsweise mit einem Hommeltester T 8000.

Erfindungsgemäß soll die erste Schutzschicht eine Rauhigkeit Rz kleiner als 0,50 µm, speziell bevorzugt kleiner als 0,45 µm, insbesondere bevorzugt kleiner als 0,40 µm aufweisen. Die Rauhigkeit Rz beschreibt die mittlere Rauheit (gemittelte Rauhtiefe, Zehnpunkthöhe) und kann gemäß DIN 4768: 1990-05 gemessen werden. Die mittlere Rauheit (Rz) bezieht sich auf eine Dimension und wird folgendermaßen ermittelt. Eine definierte Messstrecke auf der Oberfläche des Werkstücks wird in sieben gleich große Einzelmessstrecken eingeteilt. Die Auswertung erfolgt aber nur über fünf dieser Strecken, da der anzuwendende Gauß-Filter eine halbe Einzelmessstrecke Vor- bzw. Nachlauf benötigt beziehungsweise eine Faltung ein nicht zu vernachlässigendes Ein- und Auslaufverhalten aufweist. Aus den somit erhaltenen fünf Einzelrautiefen wird der Mittelwert gebildet.

Vorzugsweise kann vorgesehen sein, dass die erste Schutzschicht so ausgestaltet ist, dass beim Auftragen der Zusammensetzung, mit der die Schicht mit einem Non-Leafing-Pigment aufgetragen wird, nicht wesentliche in ihren Eigenschaften beeinträchtigt wird. Bevorzugt liegt dementsprechend ein klarer Schichtübergang beim Übergang von der ersten Schutzschicht zur Non-Leafing-Pigment-Schicht vor. Dies ist dann gegeben, wenn eine breite Übergangsschicht zwischen der ersten Schutzschicht mit der Non-Leafing-Pigment-Schicht nicht vorhanden ist. Breite Übergangsschichten entstehen, falls beim Aufbringen der Non-Leafing-Pigment-Schicht auf die erste Schutzschicht ein Angriff auf dieselbe erfolgt, beispielsweise weil das in der Zusammensetzung zur Aufbringung der Non-Leafing-Pigment-Schicht verwendete Lösungsmittel die erste Schutzschicht angreifen kann und/oder weil die erste Schutzschicht nicht ausreichend vernetzt ist. Breite Übergangsschichten sind vielfach in Form von Trübungen sichtbar.

Die erste Schutzschicht kann farblos ausgestaltet sein oder eine Farbe aufweisen. In einer bevorzugten Ausgestaltung kann beispielsweise ein Farbmittel, vorzugsweise ein Farbstoff oder Farbpigment, eingesetzt werden, welches eine Gelbfärbung der ersten Schutzschicht bewirkt. Besonders bevorzugt kann die erste Schutzschicht transparent sein.

Neben einer ersten Schutzschicht weist ein erfindungsgemäßes Abziehbild mindestens eine Non-Leafing-Pigment-Schicht auf. Vorzugsweise steht die Non-Leafing-Pigment-Schicht in Kontakt mit der ersten Schutzschicht, so dass beide Schichten benachbart sind. Die Non-Leafing-Pigment-Schicht umfasst Non-Leafing-Pigmente. Non-Leafing-Pigmente sind in der Fachwelt bekannt und zeichnen sich durch eine gute Verträglichkeit mit den Bestandteilen eines Lacks, insbesondere dem Bindemittel auf, so dass sich Non-Leafing-Pigmente homogen in einer Lackschicht verteilen können. Vorzugsweise können die Non-Leafing-Pigmente als Metalleffektpigmente ausgestaltet sein und eine plättchenförmige Gestalt (Flakes) aufweisen.

Die Non-Leafing-Pigmente können auf übliche Weise hergestellt werden. Bevorzugte Non-Leafing-Pigmente mit Metalleffekt können beispielsweise über Trockenmahlen, Nassmahlen und Physical Vapor Deposition (PVD) hergestellt werden, wobei PVD-Pigmente besonders bevorzugt eingesetzt werden können.

Bevorzugt können die Non-Leafing-Pigmente einen mittleren Durchmesser (D₅₀) im Bereich 2 bis 24 µm, vorzugsweise 4 bis 20 µm, besonders bevorzugt 6 bis 15 µm, gemessen gemäß Laserbeugung, vorzugsweise nach ISO 13320:2009-10, wobei beispielsweise ein CILAS-Lasergranulometer (CILAS 1064) eingesetzt werden kann. Hinweise zur Messung finden sich unter anderem in Partikelwelt No. 1, September 2002, Seite 2 bis 4 (Partikelanalyse mit CILAS-Laserbeugung). Bei den bevorzugt einzusetzenden plättchenförmigen Pigmenten, beziehen sich diese Werte auf den Durchmesser der Plättchen, nicht die Teilchendicke. Der D₅₀-Wert ist der Median der Verteilung (50% der Teilchen ist größer, 50% der Teilchen kleiner). Ferner kann vorgesehen sein, dass die Non-Leafing-Pigmente eine besonders enge Teilchengrößenverteilung aufweisen, wobei diese durch die Differenz zwischen dem D₁₀-Wert und dem D₉₀-Wert beschrieben werden kann (D₁₀-Wert: 10% der Teilchen ist kleiner; 90% der Teilchen größer; D₉₀-Wert: 90% der Teilchen ist kleiner; 10% der Teilchen größer). Vorzugsweise kann vorgesehen sein, dass die Differenz zwischen dem D₁₀-Wert und dem D₉₀-Wert höchstens 25 µm, vorzugsweise höchstens 15 µm, besonders bevorzugt höchstens 10 µm beträgt.

Ferner kann vorgesehen sein, dass die Non-Leafing-Pigmente der Non-Leafing-Pigment-Schicht Aluminium-, Messing- und/oder Goldbronzepigmente, vorzugsweise plättchenförmige Aluminiumpigmente umfassen.

Neben den Non-Leafing-Pigmenten umfasst die Non-Leafing-Pigment-Schicht im Allgemeinen mindestens ein Bindemittel, welche mit den Non-Leafing-Pigmenten verträglich ist. Diese Bindemittel sind im Allgemeinen bekannt. Hierzu gehören unter anderem Polyolefine, Vinyl-, Acryl- oder Methacrylpolymere, Copolymere basierend auf Acrylaten, Methacrylaten und/oder Vinylmonomeren, Polyester, Polyamide oder Phenolformaldehydharze, Polyethylenharnstoff, Polyether, vorzugsweise Cellulose oder Cellulosederivate, besonders bevorzugt Celluloseether und/oder Celluloseester.

Vorzugsweise kann das Gewichtsverhältnis von Non-Leafing-Pigmenten zu Bindemittel im Bereich von 100:1 bis 1:2, bevorzugt 30:1 bis 1:1,5, insbesondere bevorzugt 15:1 bis 1:1, speziell bevorzugt 8:1 bis 1:1.

Neben den Non-Leafing-Pigmenten kann die Non-Leafing-Pigment-Schicht Anteile an Leafing-Pigmenten enthalten. Leafing-Pigmente sind mit dem Bindemittel der Non-Leafing-Pigment-Schicht unverträglich, so dass sich Leafing-Pigmente auf der Oberfläche des Lackes beim Trocknen ansammeln. Vorzugsweise kann das Gewichtsverhältnis von Non-Leafing-Pigmenten zu Leafing-Pigmenten in der Non-Leafing-Pigment-Schicht kleiner als 1:1, bevorzugt kleiner als 5:1, besonders bevorzugt kleiner als 10:1, insbesondere bevorzugt kleiner als 20:1 und speziell bevorzugt kleiner als 100:1 sein. In einer weiteren Ausführungsform kann vorgesehen sein, dass die Non-Leafing-Pigment-Schicht keine Leafing-Pigmente umfasst.

Ferner kann vorgesehen sein, dass die Non-Leafing-Pigment-Schicht eine Dicke (Trockenfilmdicke) im Bereich von 0,3 µm bis 5 µm, vorzugsweise 0,4 µm bis 3,0 µm, besonders bevorzugt 0,5 µm bis 2 µm aufweist, gemessen mittels DIN 50981: 1979-05 und DIN 50982:1987-08, vorzugsweise mit einem Hommeltester T 8000.

Überraschende Vorteile können dadurch erzielt werden, dass die Dicke der ersten Schutzschicht mindestens 30 % der Dicke der Non-Leafing-Pigment-Schicht beträgt, vorzugsweise mindestens 50 % und besonders bevorzugt mindestens 100 %.

In einer weiteren Ausführungsform kann vorgesehen sein, dass die Non-Leafing-Pigmente Aluminiumpigmente umfassen, vorzugsweise aus Aluminiumpigmenten bestehen, und die erste Schutzschicht eingefärbt ist, wobei vorzugsweise ein gelber Farbstoff oder ein gelbes Pigment verwendet wird.

Erfindungsgemäß umfasst das Abziehbild eine zweite Schutzschicht die auf der Non-Leafing-Pigment-Schicht aufgebracht ist, so dass die Non-Leafing-Pigment-Schicht zwischen der ersten und der zweiten Schutzschicht angeordnet ist. Diese zweite Schutzschicht kann aus den gleichen Materialien aufgebaut sein, wie die erste Schutzschicht, insbesondere aus UV-Lacken und/oder 2K-Lacken. Ferner kann die zweite Schutzschicht durch eine übliche Farbschicht gebildet werden, wobei Zusammensetzungen zur Herstellung von Farbschichten unter anderem von Ferro GmbH kommerziell unter der Bezeichnung Xpression erhalten werden können.

Ferner kann vorgesehen sein, dass die zweite Schutzschicht eine Dicke im Bereich von 0,3 µm bis 6 µm, vorzugsweise 0,4 µm bis 4,0 µm, besonders bevorzugt 0,5 µm bis 3 µm aufweist (Trockenfilmdicke).

Hierbei kann die zweite Schutzschicht farblos oder farbig ausgestaltet sein. Weiterhin kann das Abziehbild eine Farbschicht umfassen, die zwischen der ersten Schutzschicht bzw. der Non-Leafing-Pigment-Schicht und der zweiten Schutzschicht angeordnet ist. Geeignete Zusammensetzungen zur Herstellung von Farbschichten können unter anderem von Ferro GmbH kommerziell unter der Bezeichnung Xpression erhalten werden. Falls die Farbschicht zwischen der ersten Schutzschicht und der Non-Leafing-Pigment-Schicht angeordnet ist, kann vorzugsweise vorgesehen sein, dass diese Farbschicht die zuvor und nachfolgend dargestellten Eigenschaften der ersten Schutzschicht aufweist, insbesondere in Bezug auf Rauhigkeit und/oder Quellbarkeit.

Ferner kann vorgesehen sein, dass das Abziehbild auf einem Träger, vorzugsweise einem Dextrin-Träger, besonders bevorzugt ein Papier mit Dextrinbeschichtung, aufgetragen ist. Alternativ kann auch Papier mit einer Polyvinylalkohol-Beschichtung eingesetzt werden.

Weiterhin kann vorgesehen sein, dass das Abziehbild auf einem Träger aufgetragen ist und eine Ablöseschicht (Striplack) aufweist, die zwischen der Non-Leafing-Pigment-Schicht und einem Träger angeordnet ist. Materialien, aus denen eine Ablöseschicht hergestellt werden können, sind in der Fachwelt weithin bekannt können unter anderem von der Ferro GmbH kommerziell innerhalb der Serie Xpression unter der Bezeichnung: Strippable Coat, unter den Nummern 80 2039 oder 80 2070 erhalten werden.

Beispielsweise kann vorgesehen sein, dass die Ablöseschicht eine Dicke (Trockenfilmdicke) im Bereich von 24 µm bis 54 µm, vorzugsweise 26 µm bis 40 µm, besonders bevorzugt 28 µm bis 30 µm aufweist, gemessen mittels DIN 50981: 1979-05 und DIN 50982:1987-08, vorzugsweise mit einem Hommeltester T 8000.

Vorzugsweise kann das Abziehbild eine Haftvermittlerschicht umfassen, die auf der Non-Leafing-Pigment-Schicht, einer zweiten Schutzschicht oder einer weiteren Schicht aufgebracht ist, so dass die Non-Leafing-Pigment-Schicht zwischen der ersten Schutzschicht und der Haftvermittlerschicht angeordnet ist. Die Haftvermittlerschicht wird entsprechend dem Anwendungszweck ausgewählt, so dass eine hohe Haftung auf dem Substrat erzielt wird. So kann für die Haftung auf Kunststoffen ein Basecoat z.B. 80 4520 der Ferro GmbH als letzte Schicht des Abziehbildes aufgetragen werden. Für die Verbesserung der Haftung auf glasartigen Oberflächen (Glas, Keramik, Email) ist alternativ die Verwendung eines Primers möglich. Vor dem Applizieren des Abziehbildes wird die zu dekorierende Fläche mit einem Primer behandelt. Silane können unter anderem als Primer eingesetzt werden.

Beispielhaft können die Primer 80 415 oder 80416 der Ferro GmbH eingesetzt werden.

Das Abziehbild kann weitere Schichten umfassen, wobei diese im Allgemeinen nicht notwendig sind. So kann beispielsweise auf eine Klebeschicht verzichtet werden, so dass ein bevorzugtes Abziehbild keine Klebeschicht aufweist. Eine Klebeschicht bezeichnet hierin eine Schicht, die eine eigenständige Haftung auf einem Substrat in trockenem Zustand bewirkt, ohne dass ein Härtungsschritt durchgeführt werden müsste, so dass eine Klebeschicht im Allgemeinen einen Klebstoff, beispielsweise einen Haftkleber aufweist.

Ein weiterer Gegenstand der vorliegenden Erfindung ist ein Verfahren zur Herstellung der erfindungsgemäßen Abziehbilder. Hierbei wird auf eine erste Schutzschicht eine Schicht mit einem Non-Leafing-Pigment aufgetragen und getrocknet.

Ferner kann vorgesehen sein, dass die Zusammensetzung, mit der die Schicht mit einem Non-Leafing-Pigment aufgetragen, wird kein Lösungsmittel aufweist, in welchem die erste Schutzschicht angelöst oder gequollen wird. Vorzugsweise führt das Lösungsmittel in der Zusammensetzung, mit der die Schicht mit einem Leafing-Pigment aufgetragen wird, zu einer Quellung der ersten Schutzschicht von höchstens 8%, bevorzugt höchstens 6%, insbesondere bevorzugt höchstens 4% und speziell bevorzugt höchstens 2%, gemessen bei 25°C nach einer Einwirkzeit von ca. 10 Stunden. Die Quellung bezieht sich hierbei auf die Volumenzunahme einer entsprechenden Schicht, deren Dicke ca. 100 µm betragen kann.

In einer weiteren bevorzugten Ausführungsform kann vorgesehen sein, dass die erste Schutzschicht vernetzt vorliegt. Eine Vernetzung kann insbesondere durch die zuvor beschriebenen Maßnahmen erzielt werden. Hierbei wird die Zusammensetzung, mit der die Schicht mit einem Non-Leafing-Pigment aufgetragen wird, vorzugsweise erst zu einem Zeitpunkt auf die erste Schutzschicht aufgebracht, zu welchem eine ausreichende Vernetzung vorhanden ist. Diese Zeit kann vom Fachmann leicht ermittelt werden und ist von vielen Faktoren abhängig. So kann die Verwendung von Härtungskatalysatoren die Härtungszeit beträchtlich herabsetzen.

Ferner hängt die Härtungszeit von den gewählten Komponenten ab. Bei Einsatz eines oder mehrerer Härtungskatalysatoren kann eine Härtungszeit von beispielsweise 1 h, vorzugsweise 4 h, besonders bevorzugt 7 h und speziell bevorzugt 24 h ausreichen, um eine Quellung bei einem Auftragen der Non-Leafing-Pigment-haltigen Zusammensetzung zu vermeiden. Ohne die Verwendung von Härtungskatalysatoren sollte eine längere Härtungszeit eingehalten werden. Beispielsweise können akzeptable Ergebnisse nach 12 Stunden, vorzugsweise 24 Stunden, besonders bevorzugt 36 Stunden und speziell bevorzugt nach 48 Stunden erhalten werden.

Vorzugsweise kann dementsprechend vorgesehen sein, dass die erste Schutzschicht so ausgestaltet ist, dass beim Auftragen der Zusammensetzung, mit der die Schicht mit einem Non-Leafing-Pigment aufgetragen wird, nicht wesentliche in ihren Eigenschaften beeinträchtigt wird. Zur Vermeidung einer Beeinträchtigung können die zuvor dargelegten Maßnahmen, insbesondere eine ausreichende Härtung oder die Verwendung von entsprechenden Lösungsmitteln, durchgeführt werden. Hierdurch können insbesondere hervorragende Glanzwerte erzielt werden.

Die erste Schutzschicht wird so aufgetragen, dass die Oberfläche eine Rauhigkeit Rz kleiner als 0,50 µm, speziell bevorzugt kleiner als 0,45 µm, insbesondere bevorzugt kleiner als 0,40 µm aufweist. Die Rauigkeit Rz der ersten Schutzschicht kann insbesondere durch Additive wie Verlaufsmittel oder Entschäumer beeinflusst werden. Auch kann die Druckgeschwindigkeit beim Siebdruck durch Blasenbildung einen Einfluss auf die Rauigkeit haben. Um die Transmissionsverluste möglichst gering zu halten, wird bei einem Siebdruckverfahren die erste Schutzschicht vorzugsweise durch ein Siebgewebe im Bereich von 90 bis 180 T, besonders bevorzugt von 100 bis 140 T und speziell bevorzugt mit 120 T aufgetragen.

Vorzugsweise kann die erste Schutzschicht mit einer Nassfilmdicke im Bereich von 8 µm bis 70 µm, vorzugsweise 9 µm bis 50 µm, besonders bevorzugt 10 µm bis 30 µm aufgetragen werden. Die Nassfilmdicke kann gemäß ISO 2808:2007-05 bestimmt werden.

Bevorzugt kann die Zusammensetzung, mit der die erste Schutzschicht aufgetragen wird, eine Viskosität im Bereich von 400 bis 4500 mPas, besonders bevorzugt im Bereich von 410 bis 2000 mPas, speziell bevorzugt im Bereich von 450 bis 1100 mPas aufweisen, gemessen bei 23°C, bei einer Scherrate von 200 s⁻¹, gemessen mit Platte/Kegel.

Ferner kann vorgesehen sein, dass die Zusammensetzung, mit der die erste Schutzschicht aufgetragen wird, einen Lösungsmittelgehalt im Bereich von 10% bis 40%, besonders bevorzugt im Bereich von 15 % bis 35 %, speziell bevorzugt im Bereich von 17 % bis 30 % aufweist. Zu geeigneten Lösungsmitteln gehören unter anderem aromatische Kohlenwasserstoffe, hydroaromatische Kohlenwasserstoffe, Ester und Glykolether.

Bevorzugt kann die Zusammensetzung, mit der die Schicht mit einem Non-Leafing-Pigment aufgetragen wird, eine Viskosität im Bereich von 80 mPas bis 8000 mPas, besonders bevorzugt im Bereich von 120 mPas bis 4000 mPas, speziell bevorzugt im Bereich von 170 mPas bis 2500 mPas aufweisen, gemessen bei 23°C, bei einer Scherrate von 200 s⁻¹, gemessen mit Platte/Kegel. Die Pasten zeigen Strukturviskosität, das heißt sie zeigen bei einer Scherrate 1,1 s⁻¹, gemessen mit Platte/Kegel bei 23°C, eine Viskosität zwischen 2 Pas und 30 Pas.

Ferner kann vorgesehen sein, dass die Non-Leafing-Pigment-Schicht mit einer Nassfilmdicke im Bereich von 6 µm bis 40 µm, vorzugsweise 9 µm bis 30 µm, besonders bevorzugt 10 µm bis 25 µm aufgetragen wird.

Ferner kann vorgesehen sein, dass die Zusammensetzung, mit der die Schicht mit einem Non-Leafing-Pigment aufgetragen wird, einen Lösungsmittelgehalt im Bereich von 70 % bis 95%, vorzugsweise im Bereich von 80 bis 92% und speziell bevorzugt im Bereich von 85% bis 90% aufweist. Zu den geeigneten Lösungsmitteln gehören unter anderem insbesondere Ester, Glykolether, Ether und Alkohole.

In einer weiteren Ausgestaltung des vorliegenden Verfahrens kann auf einen Träger zunächst eine Ablöseschicht (Striplack) aufgetragen werden, auf die eine erste Schutzschicht aufgetragen wird. Der Träger kann ein Papier mit Dextrinbeschichtung sein. Ferner kann vorgesehen sein, dass auf einen Träger, bevorzugt ein Papier mit Dextrinbeschichtung oder einer Beschichtung mit Polyvinylalkohol, eine erste Schutzschicht aufgetragen wird.

Ein weiterer Gegenstand ist die Verwendung eines erfindungsgemäßen Abziehbilds zur Erzeugung eines Dekors, wobei das Abziehbild insbesondere auf Glas, Keramik, Metall, Holz oder Kunststoff aufgetragen werden kann. Vorzugsweise kann das Abziehbild mit der zuletzt gedruckten Schicht auf das Substrat aufgetragen werden.

Vorzugsweise kann nach Auftragung des Abziehbilds auf einem Substrat gehärtet werden, wobei die Härtung vorzugsweise bei einer Temperatur im Bereich von 50°C bis 230 °C, besonders bevorzugt 60 bis 220°C erfolgt. Bei einer Temperung oberhalb von 60°C empfiehlt es sich, den Striplack vorher abzuziehen.

Ferner kann vorgesehen sein, dass auf das Substrat ein Primer aufgetragen wird, auf den das Abziehbild später appliziert wird, wobei der Primer die Haftung des Abziehbildes verbessert.

Nachfolgend wird die vorliegende Erfindung anhand von Beispielen näher erläutert, ohne dass hierdurch eine Begrenzung der Erfindung erfolgen soll.

### Beispiel 1: Herstellung des Schutzlacks (zwei Komponenten Polyurethanlack)

Es werden eine erste und eine zweite Lösung mit den folgenden Komponenten hergestellt und gemischt.

### Lösung 1:

Acrylatcopolymer 53,64 g
Solvent naphta 18,39 g
Ester (beispielsweise Butylglykolacetat) 4,6 g
Oberflächenadditiv auf Basis von Polyacrylat (beispielsweise Byk 350) 0,77 g
Oberflächenadditiv auf Basis von Polyacrylat-Copolymeren (beispielsweise Byk 394) 0,38 g
Polyethermodifiziertes Siloxan (fluorfrei) zur Verbesserung der Untergrundbenetzung 0,77 g
Die Komponenten werden gemischt

### Lösung 2:

HDI-Biuret 21,46 g

### Beispiel 2: Herstellung der Metallpaste für silberfarbene Spiegel

Folgende Komponenten werden zusammengegeben, wobei zunächst das Harz in den Lösungsmitteln gelöst wird und dann die Pigmentsuspension und das Additiv untergerührt werden.
Harz (Celluloseacetatbutyrat) 4,5 g
Ester (beispielsweise Butylacetat) 7,01 g
Alkylglykol 2,76 g
Vakuum-metallisierte Aluminium-Pigment-Suspension 84,07 g
Netz- und Dispergieradditiv (beispielsweise Disperbyk 103) 4,76 g

### Beispiel 3: Herstellung des eingefärbten Schutzlacks (zwei Komponenten Polyurethanlack)

Es werden zwei Lösungen (Lösung 3 und Lösung 4) hergestellt und kurz vor der Applikation (z.B.: Siebdruck) gemischt.

Lösung 3: Lösung 1 aus Beispiel 1 wird mit 1 % Sudangelb 373 versetzt.

### Lösung 4: identisch mit Lösung 2 aus Beispiel 1

### Beispiel 4: Abziehbildherstellung für silberfarbenen Spiegel mit 2K-Schutzlack

Gemäß den nachfolgenden Schritten wird ein Abziehbild hergestellt:
1. Auf Abziehbildpapier Trucal wird Stripplack mit 24er Sieb gedruckt und bei RT getrocknet.
2. Darauf wird der Schutzlack aus Beispiel 1 mit 120er Sieb gedruckt und bei RT getrocknet.
3. Darauf wird die Metallpaste aus Beispiel 2 mit 120er Sieb gedruckt und bei RT getrocknet.
4. Darauf wird der Schutzlack aus Beispiel 1 mit 120er Sieb gedruckt und bei RT getrocknet.
5. Je nach Substrat ist eventuell die Verwendung eines Primers zur Haftverbesserung notwendig, bei Glas wäre das 80 4515 oder 80 4516 von Ferro.
6. Das Abziehbild wird revers aufgetragen und getrocknet. Man erhält einen Spiegel der ähnlich einem Spiegel ist, den man mit einem Glanzzitronengoldpräparat nach dem Einbrand erhält.
7. Gegebenenfalls wird zur Verbesserung der Haftung das dekorierte Substrat für 15 min bei 60°C getempert. Anschließend wird der Striplack abgezogen.

### Beispiel 5: Abziehbildherstellung für goldfarbenen Spiegel mit 2K-Schutzlack

Gemäß den nachfolgenden Schritten wird ein Abziehbild hergestellt:
1. Auf Abziehbildpapier Trucal wird Stripplack mit 24er Sieb gedruckt und bei RT getrocknet.
2. Darauf wird der Schutzlack aus Beispiel 3 mit 120er Sieb gedruckt und bei RT getrocknet.
3. Darauf wird die Metallpaste aus Beispiel 2 mit 120er Sieb gedruckt und bei RT getrocknet.
4. Darauf wird der Schutzlack aus Beispiel 1 mit 120er Sieb gedruckt und bei RT getrocknet.
5. Je nach Substrat ist eventuell die Verwendung eines Primers zur Haftverbesserung notwendig, bei Glas wäre das 80 4515 oder 80 4516 von Ferro.
6. Das Abziehbild wird revers aufgetragen und getrocknet. Man erhält einen Spiegel der ähnlich einem Spiegel ist, den man mit einem Glanzgold- oder Glanzitronengoldpräparat nach dem Einbrand erhält.
7. Gegebenenfalls wird zur Verbesserung der Haftung das dekorierte Substrat für 15 min bei 60°C getempert. Anschließend wird der Striplack abgezogen.

### Beispiel 6: Abziehbildherstellung mit UV-Schutzlack

Gemäß den nachfolgenden Schritten wird ein Abziehbild hergestellt:
1. Auf Abziehbildpapier Trucal wird Stripplack mit 24er Sieb gedruckt und bei RT getrocknet.
2. Darauf wird die farblose Variante von UV Schutzlack L419 der Ferro mit 120er Sieb gedruckt und unter UV-Bestrahlung gehärtet.
3. Darauf wird die Metallpaste aus Beispiel 2 mit 120er Sieb gedruckt und bei RT getrocknet.
4. Darauf wird aus der Xpression-Serie der Ferro der 2KSchutzlack mit 120er Sieb gedruckt und bei RT getrocknet.
5. Je nach Substrat ist eventuell die Verwendung eines Primers zur Haftverbesserung notwendig, bei Glas wäre das 80 4516 von Ferro.
6. Das Abziehbild wird revers aufgetragen. Man erhält einen Spiegel, ähnlich einem Spiegel, den man mit einem Glanzplatin- oder Glanzpalladiumpräparat nach dem Einbrand erhält.
7. Gegebenenfalls wird zur Verbesserung der Haftung das dekorierte Substrat für 15 min zwischen 60°C und 160°C getempert.
8. Tempert man für 15 min bei 200°C, verfärbt sich die Schutzschicht gelb und man erhält einen Spiegel, der ähnlich einem Spiegel ist, den man mit einem Glanzgold- oder Glanzzitronengoldpräparat nach dem Einbrand erhält.

### Beispiel 7: Herstellung des eingefärbten Schutzlacks:

### Lösung 5 Mischen mittels Dissolver

| | |
|---|---|
| Acrylatcopolymer | 47,16 |
| Solvent naphta | 16,14 |
| Ester (beispielsweise Butylglykolacetat) | 13,84 |
| Gelbes Farbpigment (beispielsweise Predisol Yellow 150) | 1,82 |
| Rotes Farbpigment (beispielsweise Predisol Red 179) | 0,61 |
| Oberflächenadditiv auf Basis Polyacrylat (beispielsweise Byk 350) | 0,16 |
| Oberflächenadditiv auf Basis von Polyacylatcopolymeren (beispielsweise Byk 394) | 0,33 |
| Polyethermodifiziertes Siloxan (fluorfrei) zur Verbesserung der Untergrundbenetzung | 0,33 |
| | |

| Lösung 2 | |
|---|---|
| HDI Biuret | 19,60 |

Lösung 5 und Lösung 2 werden vor dem Drucken gemischt.

### Beispiel 8: Herstellung der Metallpaste analog Beispiel 2 (Harze werden im Lösungsmittel vorgelöst)

| | |
|---|---|
| Harz (Celluloseacetatbutyrat) | 3,84 g |
| Harz (Methylmetacrylat) | 1,24 g |
| Dowanol PM | 25,34 g |
| Ester (beispielsweise Butyldiglykolacetat) | 10,28 g |
| Vakuum-metallisierte Aluminium-Pigmentsuspension | 59,31 g |

### Beispiel 9: Abziebildherstellung für goldfarbenen Spiegel mit 2K-Lack

1. Striplack 80 2070 (Ferro Verkaufsprodukt) wird mit 24er Sieb auf Abziehbildpapier (Trucal Plus 170) gedruckt
2. Drucken des Schutzlacks aus Beispiel 10 mit 100er Sieb, 2 Tage trocknen lassen
3. Drucken der Metallpaste aus Beispiel 12 mit 120er Sieb
4. Drucken des Schutzlacks aus Beispiel 10 mit 100er Sieb
5. Es wurde der Primer 804515 auf Glas aufgetragen
6. Das Abziehbild wurde revers aufgetragen und getrocknet Man erhält einen Spiegel, der ähnlich einem Spiegel ist, den man bei einem Glanzgoldpräparat nach dem Einbrand erhält.
7. Das Abziehbild wurde 15 min bei 60°C getempert. Anschließend wurde der Striplack abgezogen.

### Beispiel 10: optimierter Schutzlack, Herstellung analog Beispiel 1

### Lösung 6

| | |
|---|---|
| Acrylatcopolymer | 54,15 g |
| Solvent naphta | 18,56 g |
| Ester (beispielsweise Butylglykolacetat) | 4,64 g |
| Silikonfreier Entschäumer | 0,3 g |
| | |

| Lösung 2 | |
|---|---|
| HDI Biuret | 22,35 g |

Lösung 6 und Lösung 2 werden vor dem Drucken gemischt.

### Beispiel 11: Schutzlack analog Beispiel 8 aber mit Katalysator

### Lösung 9

| | |
|---|---|
| Acrylatcopolymer | 53,89 g |
| Solvent naphta | 18,48 g |
| Ester (beispielsweise Butylglykolacetat) | 4,62 g |
| Silikonfreier Entschäumer | 0,3 g |
| Zink-haltiger Katalysator | 0,5 |

| Lösung 2 | |
|---|---|
| HDI Biuret | 22,22 g |

Lösung 9 und Lösung 2 werden vor dem Drucken gemischt.

### Beispiel 12: Herstellung der Metallpaste analog Beispiel 2

| | |
|---|---|
| Harz (Celluloseacetatbutyrat) | 1,42 g |
| Ester (beispielsweise Butylglykolacetat) | 7,07 g |
| Ester (beispielsweise Butyldiglykolacetat) | 2,79 g |
| Vakuum-metallisierte Aluminium-Pigmentsuspension | 84,88 g |

### Beispiel 13: Abziehbildherstellung für silberfarbenen Spiegel mit 2K-Lack

1. Striplack 80 2070 (Ferro Verkaufsprodukt) wird mit 24er Sieb auf Abziehbildpapier (Trucal Plus 170) gedruckt
2. Drucken des Schutzlacks aus Beispiel 11 mit 100er Sieb, 1 Tag trocknen lassen.
3. Drucken der Metallpaste aus Beispiel 12 mit 120er Sieb
4. Drucken des Schutzlacks aus Beispiel 11 mit 100er Sieb
5. Es wurde der Primer 804515 auf Glas aufgetragen
6. Das Abziehbild wurde revers aufgetragen und getrocknet Man erhält einen Spiegel, der ähnlich einem Spiegel ist, den man bei einem Glanzplatinpräparat nach dem Einbrand erhält.
7. Das Abziehbild wurde 15 min bei 60°C getempert. Anschließend wurde der Striplack abgezogen.
Glanzmessung: 1124 GE

### Beispiel 14: Abziehbildherstellung für silberfarbenen Spiegel mit 2K-Lack

8. Striplack 80 2070 (Ferro Verkaufsprodukt) wird mit 24er Sieb auf Abziehbildpapier (Trucal Plus 170) gedruckt
9. Drucken des Schutzlacks aus Beispiel 10 mit 100er Sieb, 4 Tage trocknen lassen
10. Drucken der Metallpaste aus Beispiel 12 mit 120er Sieb
11. Drucken des Schutzlacks aus Beispiel 10 mit 100er Sieb
12. Es wurde der Primer 804515 auf Glas aufgetragen
13. Das Abziehbild wurde revers aufgetragen und getrocknet Man erhält einen Spiegel, der ähnlich einem Spiegel ist, den man bei einem Glanzplatinpräparat nach dem Einbrand erhält.
14.Das Abziehbild wurde 15 min bei 60°C getempert. Anschließend wurde der Striplack abgezogen.
Glanzmessung: 997 GE

### Beispiel 15: Abziehbildherstellung für silberfarbenen Spiegel mit 2K-Lack

1. Striplack 80 2070 (Ferro Verkaufsprodukt) wird mit 24er Sieb auf Abziehbildpapier (Trucal Plus 170) gedruckt
2. Drucken des Schutzlacks aus Beispiel 10 mit 100er Sieb, 1 Tag trocknen lassen
3. Drucken der Metallpaste aus Beispiel 12 mit 120er Sieb
4. Drucken des Schutzlacks aus Beispiel 10 mit 100er Sieb
5. Es wurde der Primer 804515 auf Glas aufgetragen
6. Das Abziehbild wurde revers aufgetragen und getrocknet Man erhält einen Spiegel, der ähnlich einem Spiegel ist, den man bei einem Glanzplatinpräparat nach dem Einbrand erhält.
7. Das Abziehbild wurde 15 min bei 60°C getempert. Anschließend wurde der Striplack abgezogen.
Glanzmessung: 367

### Beispiel 16: optimierter Schutzlack, Herstellung analog Beispiel 1

### Lösung 10

| | |
|---|---|
| Acrylatcopolymer | 54,08 g |
| Solvent naphta | 18,54 g |
| Ester (beispielsweise Butylglykolacetat) | 4,64 g |
| Silikonhaltiger Entschäumer | |
| | 0,4 g |

| Lösung 2 | |
|---|---|
| HDI Biuret | 22,25 g |

Lösung 10 und Lösung 2 werden vor dem Drucken gemischt.

### Beispiel 17

| | |
|---|---|
| 80 4552 (Xpression 2K-Schutzlack, Ferro Verkaufsprodukt) | 100 g |
| 80 4553 (Xpression Härter, Ferro Verkaufsprodukt) | 30 g |

Beide Präparate werden unmittelbar vor dem Drucken gemischt.

### Beispiel 18:

Abziehbildherstellung für silberfarbenen Spiegel mit 2K-Lack und 2K-Xpessionschutzlack
1. Striplack 80 2070 (Ferro Verkaufsprodukt) wird mit 24er Sieb auf Abziehbildpapier (Trucal Plus 170) gedruckt
2. Drucken des Schutzlacks aus Beispiel 17 mit 120er Sieb
3. Drucken des Schutzlacks aus Beispiel 16 mit 100er Sieb
4. Drucken der Metallpaste aus Beispiel 12 mit 120er Sieb
5. Drucken des Schutzlacks aus Beispiel 16 mit 100er Sieb
6. Es wurde der Primer 80 4515 auf Glas aufgetragen
7. Das Abziehbild wurde revers aufgetragen, d.h. mit dem Stripplack als oberste Schicht. Anschließen wird getrocknet. Man erhält einen Spiegel, der ähnlich einem Spiegel ist, den man bei einem Glanzplatinpräparat nach dem Einbrand erhält.
8. Das Abziehbild wurde 15 min bei 60°C getempert. Anschließend wurde der Striplack abgezogen.
Glanzmessung: 635 GE

### Vergleichsbeispiel

1. Striplack 80 2070 (Ferro Verkaufsprodukt) wird mit 24er Sieb auf Abziehbildpapier (Trucal Plus 170) gedruckt
2. Drucken des Schutzlacks aus Beispiel 17 mit 120er Sieb
3. Drucken des Schutzlacks aus Beispiel 16 mit 100er Sieb
4. Drucken der Metallpaste aus Beispiel 12 mit 120er Sieb
5. Drucken des Schutzlacks aus Beispiel 16 mit 100er Sieb
6. Es wurde der Primer 804515 auf Glas aufgetragen
7. Das Abziehbild wurde mit dem Stripplack als unterste Schicht aufgetragen und getrocknet. Man erhält ein silberfarbenes, mattes Dekor.
8. Das Abziehbild wurde 15 min bei 60°C getempert.
Glanzmessung: 78 GE

Die Beispiele zeigen, dass durch die vorliegende Erfindung ausgezeichnete Abziehbilder erhältlich sind, die zu einem hohen metallischen Spiegeleffekt führen, falls die Abziehbilder entsprechend der vorliegenden Erfindung ausgeführt sind, also unter anderem sich dadurch auszeichnen, dass die Non-Leafing-Pigment-Schicht näher zu einem Substrat hin aufgetragen werden kann als die erste Schutzschicht. Hierdurch kann, wie gezeigt, der Glanzeffekt von 78 GE auf 635 GE gesteigert werden.

## Patentansprüche

1. Abziehbild zur Erzeugung eines Dekors, umfassend eine Non-Leafing-Pigment-Schicht und eine erste Schutzschicht, wobei das Abziehbild so ausgestaltet ist, dass die Non-Leafing-Pigment-Schicht näher zu einem Substrat hin aufgetragen werden kann als die erste Schutzschicht und wobei die Non-Leafing-Pigmente als Metalleffektpigmente ausgestaltet sind und eine plättchenförmige Gestalt aufweisen, **dadurch gekennzeichnet, dass** die Non-Leafing-Pigment-Schicht einen metallischen Spiegeleffekt mit einem Glanz von mindestens 200 Glanzeinheiten erzeugt, wobei der Glanz bei 20° über eine Messung des gerichteten Reflexionsgrades entsprechend DIN EN ISO 7668:2011-03 bestimmt wird, wobei die erste Schutzschicht eine Rauhigkeit Rz kleiner als 0,50 µm aufweist, und das Abziehbild eine zweite Schutzschicht umfasst, die auf der Non-Leafing-Pigment-Schicht aufgebracht ist, so dass die Non-Leafing-Pigment-Schicht zwischen der ersten und der zweiten Schutzschicht angeordnet ist.

2. Abziehbild gemäß Anspruch 1, **dadurch gekennzeichnet, dass** die Non-Leafing-Pigment-Schicht einen Glanz von mindestens 300 Glanzeinheiten gemessen bei 20°, besonders bevorzugt einen Glanzgold-, Glanzzitronengold-, Glanzplatin- und Glanzpalladium-Effekt erzeugt.

3. Abziehbild gemäß Anspruch 1 oder 2, **dadurch gekennzeichnet, dass** die Dicke der ersten Schutzschicht mindestens 30 % der Dicke der Non-Leafing-Pigment-Schicht beträgt, vorzugsweise mindestens 50 % und besonders bevorzugt mindestens 100 %.

4. Abziehbild gemäß mindestens einem der vorhergehenden Ansprüche, **dadurch gekennzeichnet, dass** die erste Schutzschicht eine Rauhigkeit Rz kleiner als 0,4 µm aufweist.

5. Abziehbild gemäß mindestens einem der vorhergehenden Ansprüche, **dadurch gekennzeichnet, dass** das Abziehbild auf einem Dextrin-Träger oder Polyvinylalkohol-Träger, bevorzugt ein Papier mit Dextrinbeschichtung, aufgetragen ist.

6. Abziehbild gemäß mindestens einem der vorhergehenden Ansprüche, **dadurch gekennzeichnet, dass** das Abziehbild eine Farbschicht umfasst, die auf der Non-Leafing-Pigment-Schicht aufgebracht ist, so dass die Farbschicht zwischen der Non-Leafing-Pigment-Schicht und der zweiten Schutzschicht angeordnet ist.

7. Abziehbild gemäß mindestens einem der vorhergehenden Ansprüche, **dadurch gekennzeichnet, dass** das Abziehbild auf einem Träger aufgetragen ist und eine Ablöseschicht aufweist, die zwischen der ersten Schutzschicht und einem Träger angeordnet ist.

8. Abziehbild gemäß mindestens einem der vorhergehenden Ansprüche, **dadurch gekennzeichnet, dass** die erste Schutzschicht farblos und transparent ist.

9. Abziehbild gemäß mindestens einem der vorhergehenden Ansprüche, **dadurch gekennzeichnet, dass** die Non-Leafing-Pigment-Schicht keine Leafing-Pigmente umfasst.

10. Abziehbild gemäß mindestens einem der vorhergehenden Ansprüche, **dadurch gekennzeichnet, dass** die Non-Leafing-Pigmente der Non-Leafing-Pigment-Schicht Aluminium-, Messing- und/oder Goldbronzepigmente, vorzugsweise plättchenförmige Aluminiumpigmente umfassen.

11. Abziehbild gemäß mindestens einem der vorhergehenden Ansprüche 1 bis 7, 9 und 10, **dadurch gekennzeichnet, dass** die Non-Leafing-Pigmente Aluminiumpigmente umfasst, vorzugsweise aus Aluminiumpigmenten bestehen, und die erste Schutzschicht eingefärbt ist, wobei vorzugsweise ein gelber Farbstoff oder ein gelbes Pigment verwendet wird.

12. Abziehbild gemäß mindestens einem der vorhergehenden Ansprüche, **dadurch gekennzeichnet, dass** das Abziehbild eine Haftvermittlerschicht umfasst, die auf der Non-Leafing-Pigment-Schicht, einer zweiten Schutzschicht oder einer weiteren Schicht aufgebracht ist, so dass die Non-Leafing-Pigment-Schicht zwischen der ersten Schutzschicht und der Haftvermittlerschicht angeordnet ist.

13. Verfahren zur Herstellung eines Abziehbilds gemäß einem der vorhergehenden Ansprüche, **dadurch gekennzeichnet, dass** auf eine erste Schutzschicht eine Schicht mit einem Non-Leafing-Pigment aufgetragen und getrocknet wird, wobei die erste Schutzschicht so aufgetragen wird, dass die Oberfläche eine Rauhigkeit Rz kleiner als 0,50 µm aufweist.

14. Verfahren gemäß Anspruch 13, **dadurch gekennzeichnet, dass** die Zusammensetzung, mit der die Schicht mit einem Non-Leafing-Pigment aufgetragen, wird kein Lösungsmittel aufweist, in welchem die erste Schutzschicht angelöst oder gequollen wird.

15. Verfahren gemäß einem der vorhergehenden Ansprüche 13 oder 14, **dadurch gekennzeichnet, dass** auf einen Träger zunächst eine Ablöseschicht aufgetragen wird, auf die erste Schutzschicht aufgetragen wird.

16. Verfahren gemäß einem der vorhergehenden Ansprüche 13 bis 15, **dadurch gekennzeichnet, dass** auf einen Träger, bevorzugt ein Papier mit Dextrinbeschichtung, die erste Schutzschicht aufgetragen wird.

17. Verfahren gemäß einem der vorhergehenden Ansprüche 13 bis 16, **dadurch gekennzeichnet, dass** die erste Schutzschicht so aufgetragen wird, dass die Oberfläche eine Rauhigkeit Rz kleiner als 0,4 µm aufweist.

18. Verwendung eines Abziehbilds gemäß einem der vorhergehenden Ansprüche 1 bis 12, **dadurch gekennzeichnet, dass** das Abziehbild auf Glas, Keramik, Metall, Holz oder Kunststoff aufgetragen wird, wobei das Abziehbild mit der zuletzt gedruckten Schicht auf das Substrat appliziert wird.

19. Verwendung gemäß Anspruch 18, **dadurch gekennzeichnet, dass** eine Härtung erfolgt und die Härtung bei einer Temperatur im Bereich von 50°C bis 230 °C, vorzugsweise 60 bis 220°C erfolgt.

20. Verwendung gemäß Anspruch 18 oder 19, **dadurch gekennzeichnet, dass** auf das Substrat ein Primer aufgetragen wird, auf den das Abziehbild später appliziert wird, wobei der Primer die Haftung des Abziehbildes verbessert.

## Claims

1. Decal for producing a decoration, comprising a non-leafing pigment layer and a first protective layer, the decal being designed such that the non-leafing pigment layer can be applied closer to a substrate than the first protective layer, and the non-leafing pigments being designed as metallic effect pigments and having a flake-like form, **characterized in that** the non-leafing pigment layer produces a metallic specular effect having a gloss of at least 200 gloss units, the gloss being determined at 20° by measuring the directed reflectance in accordance with DIN EN ISO 7668: 2011-03, the first protective layer having a roughness Rz of less than 0.50 µm, and the decal comprising a second protective layer which is applied to the non-leafing pigment layer such that the non-leafing pigment layer is arranged between the first protective layer and the second protective layer.

2. Decal according to claim 1, **characterized in that** the non-leafing pigment layer produces a gloss of at least 300 gloss units measured at 20°, particularly preferably a glossy gold, glossy lemon gold, glossy platinum and glossy palladium effect.

3. Decal according to either claim 1 or claim 2, **characterized in that** the thickness of the first protective layer is at least 30% of the thickness of the non-leafing pigment layer, preferably at least 50% and particularly preferably at least 100%.

4. Decal according to at least one of the preceding claims, **characterized in that** the first protective layer has a roughness Rz of less than 0.4 µm.

5. Decal according to at least one of the preceding claims, **characterized in that** the decal is applied to a dextrin substrate or polyvinyl alcohol substrate, preferably a paper having a dextrin coating.

6. Decal according to at least one of the preceding claims, **characterized in that** the decal comprises a color layer which is applied to the non-leafing pigment layer, such that the color layer is arranged between the non-leafing pigment layer and the second protective layer.

7. Decal according to at least one of the preceding claims, **characterized in that** the decal is applied to a substrate and has a release layer which is arranged between the first protective layer and a substrate.

8. Decal according to at least one of the preceding claims, **characterized in that** the first protective layer is colorless and transparent.

9. Decal according to at least one of the preceding claims, **characterized in that** the non-leafing pigment layer does not comprise any leafing pigments.

10. Decal according to at least one of the preceding claims, **characterized in that** the non-leafing pigments of the non-leafing pigment layer comprise aluminum pigments, brass pigments and/or gold bronze pigments, preferably flake-like aluminum pigments.

11. Decal according to at least one of the preceding claims 1 to 7, 9 and 10, **characterized in that** the non-leafing pigments comprise aluminum pigments, preferably consist of aluminum pigments, and the first protective layer is colored, preferably using a yellow dye or a yellow pigment.

12. Decal according to at least one of the preceding claims, **characterized in that** the decal comprises an adhesion promoter layer which is applied to the non-leafing pigment layer, a second protective layer or a further layer, such that the non-leafing pigment layer is arranged between the first protective layer and the adhesion promoter layer.

13. Method for producing a decal according to any of the preceding claims, **characterized in that** a layer having a non-leafing pigment is applied to a first protective layer and dried, the first protective layer being applied such that the surface has a roughness Rz of less than 0.50 µm.

14. Method according to claim 13, **characterized in that** the composition with which the layer having a non-leafing pigment is applied does not contain a solvent in which the first protective layer is partially dissolved or swollen.

15. Method according to either of the preceding claims 13 or 14, **characterized in that** a release layer is first applied to a substrate, on which release layer the first protective layer is applied.

16. Method according to any of the preceding claims 13 to 15, **characterized in that** the first protective layer is applied to a substrate, preferably a paper having a dextrin coating.

17. Method according to any of the preceding claims 13 to 16, **characterized in that** the first protective layer is applied such that the surface has a roughness Rz of less than 0.4 µm.

18. Use of a decal according to any of the preceding claims 1 to 12, **characterized in that** the decal is applied to glass, ceramic, metal, wood or plastics material, the decal being applied to the substrate with the layer which was printed last.

19. Use according to claim 18, **characterized in that** curing takes place and the curing takes place at a temperature in the range of from 50°C to 230°C, preferably 60 to 220°C.

20. Use according to either claim 18 or 19, **characterized in that** a primer is applied to the substrate, to which primer the decal is later applied, the primer improving the adhesion of the decal.

## Revendications

1. Décalcomanie pour la réalisation d'une décoration, comportant une couche de pigment non pelliculant et une première couche protectrice, la décalcomanie étant réalisée de telle sorte que la couche de pigment non pelliculant peut être appliquée plus près d'un substrat que la première couche protectrice, et les pigments non pelliculants étant réalisés en tant que pigments à effet métallique et présentant une configuration en paillettes, **caractérisée par le fait que** la couche de pigment non pelliculant réalise un effet miroir métallique avec une brillance d'au moins 200 unités de brillance, la brillance à 20° étant définie par une mesure du degré de réflexion ciblé conformément à DIN EN ISO 7668 : 2011-03, la première couche protectrice présentant une rugosité Rz inférieure à 0,50 µm, et la décalcomanie comportant une seconde couche protectrice, qui est appliquée sur la couche de pigment non pelliculant, de telle sorte que la couche de pigment non pelliculant est disposée entre la première et la seconde couche protectrice.

2. Décalcomanie selon la revendication 1, **caractérisée par le fait que** la couche de pigment non pelliculant réalise une brillance d'au moins 300 unités de brillance mesurée à 20°, de façon particulièrement préférée un effet or brillant, or citron brillant, platine brillant et palladium brillant.

3. Décalcomanie selon l'une des revendications 1 ou 2, **caractérisée par le fait que** l'épaisseur de la première couche protectrice est d'au moins 30 % de l'épaisseur de la couche de pigment non pelliculant, de préférence d'au moins 50 % et de façon particulièrement préférée d'au moins 100 %.

4. Décalcomanie selon au moins l'une des revendications précédentes, **caractérisée par le fait que** la première couche protectrice présente une rugosité Rz inférieure à 0,4 µm.

5. Décalcomanie selon au moins l'une des revendications précédentes, **caractérisée par le fait que** la décalcomanie est appliquée sur un support de dextrine ou un support d'alcool polyvinylique, de préférence un papier ayant un revêtement de dextrine.

6. Décalcomanie selon au moins l'une des revendications précédentes, **caractérisée par le fait que** la décalcomanie comporte une couche colorée, qui est appliquée sur la couche de pigment non pelliculant, de telle sorte que la couche colorée est disposée entre la couche de pigment non pelliculant et la seconde couche protectrice.

7. Décalcomanie selon au moins l'une des revendications précédentes, **caractérisée par le fait que** la décalcomanie est appliquée sur un support et présente une couche pelable, qui est disposée entre la première couche protectrice et un support.

8. Décalcomanie selon au moins l'une des revendications précédentes, **caractérisée par le fait que** la première couche protectrice est incolore et transparente.

9. Décalcomanie selon au moins l'une des revendications précédentes, **caractérisée par le fait que** la couche de pigment non pelliculant ne comporte pas de pigments pelliculants.

10. Décalcomanie selon au moins l'une des revendications précédentes, **caractérisée par le fait que** les pigments non pelliculants de la couche de pigment non pelliculant comportent des pigments d'aluminium, de laiton et/ou de bronze doré, de préférence des pigments d'aluminium en paillettes.

11. Décalcomanie selon au moins l'une des revendications précédentes 1 à 7, 9 et 10, **caractérisée par le fait que** les pigments non pelliculants comportent des pigments d'aluminium, de préférence sont constitués de pigments d'aluminium, et la première couche protectrice est colorée, un colorant jaune ou un pigment jaune étant, de préférence, utilisé.

12. Décalcomanie selon au moins l'une des revendications précédentes, **caractérisée par le fait que** la décalcomanie comporte une couche adhésive, qui est appliquée sur la couche de pigment non pelliculant, une seconde couche protectrice ou une autre couche, de telle sorte que la couche de pigment non pelliculant est disposée entre la première couche protectrice et la couche adhésive.

13. Procédé de fabrication d'une décalcomanie selon l'une des revendications précédentes, **caractérisé par le fait qu'**une couche ayant un pigment non pelliculant est appliquée sur une première couche protectrice et est séchée, la première couche protectrice étant appliquée de telle sorte que la surface présente une rugosité Rz inférieure à 0,50 µm.

14. Procédé selon la revendication 13, **caractérisé par le fait que** la composition avec laquelle la couche ayant un pigment non pelliculant est appliquée ne présente pas de solvant dans lequel la première couche protectrice est dissoute ou gonflée.

15. Procédé selon l'une des revendications précédentes 13 ou 14, **caractérisé par le fait que**, sur un support, une couche pelable est appliquée tout d'abord, sur laquelle la première couche protectrice est appliquée.

16. Procédé selon l'une des revendications précédentes 13 à 15, **caractérisé par le fait que**, sur un support, de préférence un papier ayant un revêtement de dextrine, la première couche protectrice est appliquée.

17. Procédé selon l'une des revendications précédentes 13 à 16, **caractérisé par le fait que** la première couche protectrice est appliquée de telle sorte que la surface présente une rugosité Rz inférieure à 0,4 µm.

18. Utilisation d'une décalcomanie selon l'une des revendications précédentes 1 à 12, **caractérisée par le fait que** la décalcomanie est appliquée sur du verre, de la céramique, du métal, du bois ou une matière plastique, la décalcomanie étant appliquée sur le substrat avec la couche imprimée en dernier .

19. Utilisation selon la revendication 18, **caractérisée par le fait qu'**un durcissement a lieu et le durcissement a lieu à une température dans la plage de 50 °C à 230 °C, de préférence de 60 à 220 °C.

20. Utilisation selon l'une des revendications 18 ou 19, **caractérisée par le fait que**, sur un substrat, un primaire est appliqué, sur lequel la décalcomanie est appliquée après, le primaire améliorant l'adhérence de la décalcomanie.
